# EUROPÄISCHE PATENTANMELDUNG

(11) **EP 3 840 108 A1**
(43) Veröffentlichungstag der Anmeldung: **23.06.2021**
(21) Anmeldenummer: 20215449.8
(22) Anmeldetag: 18.12.2020
(51) Int. Cl.: H01M 10/613

(54) **AKKUPACK MIT IM ROLL-BOND-VERFAHREN HERGESTELLTEM KÜHLKÖRPER UND HERSTELLVERFAHREN DAFÜR**

(30) Priorität: 20.12.2019 DE 202019107171 U
(71) Anmelder: Stoba E-Systems GmbH, 71384 Weinstadt (DE)
(72) Erfinder: GRAUER, Manuel, 71384 Weinstadt (DE)
(74) Vertreter: Winter, Brandl - Partnerschaft mbB

(57) **Zusammenfassung**

Die Erfindung betrifft einen Akkupack (1) für eine Energieversorgung eines Elektromotors, mit mehreren zylindrischen Stromspeicherzellen (2), wobei die Stromspeicherzellen (2) nebeneinander angeordnet sind, wobei die Stromspeicherzellen (2) auf derselben Seite wenigstens einen elektrischen Anschluss (3) besitzen, wobei jeder dieser elektrischen Anschlüsse (3) mit einem gemeinsamen Stromleiter (4) im Bereich einer Zellverbindung (5) verbunden ist, und wobei ferner ein Stromleiter (4) als zweilagiges (Kontakt-)Blech (7) ausgebildet ist, das wenigstens einen Kühlkanal (6) zur Abfuhr von über die elektrischen Anschlüsse (3) übertragene Wärme der Stromspeicherzelle (2) ausbildet sowie ein Verfahren zu dessen Herstellung.

## Beschreibung

Die Erfindung betrifft eine Kühlung eines zylindrische Zellen umfassenden Akkupacks über den Pol, mit Hilfe von Kühlkörpern, hergestellt mit dem Roll-bond-Verfahren. Die Erfindung betrifft ferner ein Herstellverfahren.

Insbesondere betrifft die Erfindung einen Akkupack für eine Energieversorgung eines Elektromotors, mit mehreren zylindrischen Stromspeicherzellen, wobei die Stromspeicherzellen nebeneinander, etwa unter Einnahme einer räumlichen Anordnung in einer Matrix, angeordnet sind, wobei die Stromspeicherzellen auf derselben Seite wenigstens einen elektrischen Anschluss besitzen, wobei jeder der elektrischen Anschlüsse mit einem gemeinsamen Stromleiter im Bereich einer (eigenen) Zellverbindung physisch verbunden ist.

Aus dem Stand der Technik ist bereits das Kühlen der zylindrischen Zelle in einem Akkupack bekannt. Die Kühlung wird aber üblicherweise über den Mantel mittels einer Luftkühlung oder über Kühlschlangen realisiert. Dies führt zu einer ineffizienten Kühlung durch die Gehäusebauform zylindrischer Akkuzellen, eine inhomogene Kühlung der Zellen, und eine Verringerung der Lebensdauer, sowie zu einer aufwändigen Montage der Kühlschlangen.

Es ist die Aufgabe der vorliegenden Erfindung, die Nachteile aus dem Stand der Technik zu beseitigen oder wenigstens zu mildern und insbesondere eine Kühlung einer zylindrischen Zelle in einem Akkupack zur Verfügung zu stellen und die Leitung des elektrischen Stroms der Zellen zu ermöglichen. Es soll insbesondere der Bauraum besser genutzt werden, eine homogene Zellkühlung erreicht werden und die Lebensdauer verbessert werden. Letztlich soll auch eine kostengünstige Produktion ermöglicht werden.

Diese Aufgabe wird bei einem gattungsgemäßen Akkupack erfindungsgemäß dadurch gelöst, dass der Stromleiter als zweilagiges (Kontakt-)Blech ausgebildet ist, das wenigstens einen Kühlkanal oder mehrere Kühlkanäle zur Abfuhr von über die elektrischen Anschlüsse übertragene Wärme der Stromspeicherzelle ausbildet.

Das wesentlich Neue der erfindungsgemäßen Lösung besteht darin, dass eine Integration eines Kühlkörpers und eines Zellverbinders erreicht wird.

Vorteilhafte Ausführungsformen sind in den Unteransprüchen beansprucht und werden nachfolgend näher erläutert.

So ist es gerade von Vorteil, wenn sich der Kühlkanal in eine Vielzahl von Teilkühlkanäle im Inneren des Stromleiters aufteilt, da dadurch die Kühlflüssigkeit in dem Kühlkanal über die Teilkühlkanäle exakt jeder Zelle zugeführt werden kann.

Dabei hat es sich bewährt, wenn wenigstens einige der Teilkühlkanäle zwischen den Verbindungen verlaufen. Auf diese Weise wird jede Zell-Verbindung / Verbindung für sich gekühlt.

Ferner hat es sich bewährt, wenn der Stromleiter einen Hauptkörper besitzt, der einen Zulauf und einen Ablauf besitzt, wobei der Hauptkörper darüber hinaus außenseitig verschlossen ist. Eine Leckage eines verwendeten Kühlmittels, wie einer Flüssigkeit, etwa Öl, wird dadurch vermieden.

Wenn zwei (Kontakt-)Bleche miteinander in einem Roll-Bond-Verfahren unlösbar verbunden sind, so kann auf ein kostengünstiges Herstellverfahren zurückgegriffen werden.

Dabei hat es sich bewährt, wenn der Kühlkanal und/oder die Teilkühlkanäle in dem Roll-Bond-Verfahren geschaffen sind und/oder die Verbindung(en) der elektrischen Anschlüsse mit dem Roll-Bond-Verfahren geschaffen ist/sind. Eine zeitextensive Fertigung ist dann möglich.

Wenn die (Kontakt-)Bleche auf der den Teilkühlkanälen zugewandten Innenseite eine Trennmittelbeschichtung besitzen, so ist eine elektrische Stromführung besonders geschickt zu realisieren.

Zusätzlich oder alternativ kann auch eine elektrisch nicht-leitfähige Kühlflüssigkeit, wie etwa Öl eingesetzt sein.

Eine vorteilhafte Ausführungsform ist auch dadurch gekennzeichnet, dass der Stromleiter auf seiner dem elektrischen Anschluss zugewandten Seite eine elektrisch isolierende Beschichtung besitzt und/oder in dem Kühlkanal / in den Teilkühlkanälen eine elektrisch nicht-leitfähige Flüssigkeit (wie Öl) vorhanden ist bzw. einbringbar ist.

Letztlich ist es auch von Vorteil, wenn der elektrische Anschluss mit einem (Kontakt-) Blech oder beiden (Kontakt-)Blechen unter Ausbildung der Zellverbindung verschweißt ist.

Die Erfindung betrifft auch ein Verfahren zum Herstellen eines Akkupacks der erfindungsgemäßen Art, wobei die elektrischen Anschlüsse mehrerer Stromspeicherzellen mit einem Stromleiter verschweißt werden und der Stromleiter (dabei oder vorher) aus zwei (Kontakt-)Blechen unter Ausbildung von Kühlkanälen in einem Roll-Bond-Verfahren hergestellt wird.

Die zylindrischen Zellen werden über ihre Pole gekühlt. Der Kühlkörper, platziert an beiden Polen, wird mittels dem Roll-Bond-Verfahren hergestellt. Dabei werden zwei Metallplatten (z. B. Aluminium, Stahl, vernickelter Stahl, Kupfer) durch Walzen bei großem Druck so miteinander gefügt, dass zwischen den Platten ein Kühlkanal für die Leitung einer Kühlflüssigkeit entsteht. Anschließend werden die Zellen direkt auf dem Kühlkörper verschweißt, womit der Kühlkörper auch als elektrischer Ableiter / Verbinder der Zellen dient. Um die Kühlflüssigkeit elektrisch zu isolieren, sind bspw. zwei Methoden denkbar:
a) Verwendung einer elektrisch nicht-leitfähigen Kühlflüssigkeit, z. B. Öl, und/oder
b) Beschichtung der Metallplatten mit einer elektrisch isolierenden Beschichtung auf der zugewandten Seite vor dem Roll-Bonding.

Die Erfindung wird nachfolgend mit Hilfe einer Zeichnung näher erläutert. Es zeigen:
Fig. 1 eine schematische Draufsicht auf eine erfindungsgemäße Ausführungsform eines Akkupacks, und
Fig. 2 einen Längsschnitt entlang der Linie II aus Fig. 2.

Die Figuren sind lediglich schematischer Natur und dienen lediglich zum Verständnis der Erfindung. Die gleichen Elemente sind mit denselben Bezugszeichen versehen.

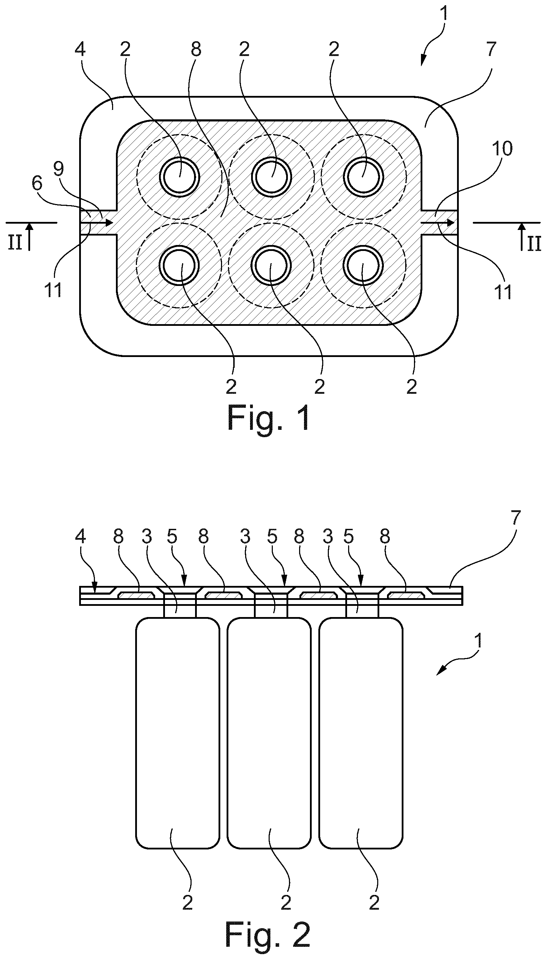

In Fig. 1 ist ein erfindungsgemäßes Akkupack 1 dargestellt. Es weist zumindest sechs Stromspeicherzellen 2 auf. Die Stromspeicherzellen 2 sind, wie in Fig. 1 gut zu erkennen, nach Art einer Matrix angeordnet, nämlich in Zeilen und Spalten. Es gibt zwei Zeilen und sechs Spalten. Jede andere Aufteilung ist auch denkbar.

Die Stromspeicherzellen 2 besitzen zumindest auf einer Seite jeweils einen elektrischen Anschluss 3. Jeder elektrische Anschluss 3 ist, wie auch gut in Fig. 2 zu erkennen, mit einem Stromleiter 4 verbunden. Im Bereich des Kontaktierens der elektrischen Anschlüsse 3 mit dem Stromleiter 4 sind physische Zellverbindungen / Verbindungen / Verbinder 5 vorhanden.

Im Inneren des Stromleiters 4 gibt es zumindest einen Kühlkanal 6. Der Stromleiter 4 ist auf zwei (Kontakt-)Blechen 7 aufgebaut. Diese (Kontakt-)Bleche 7 sind in einem Roll-Bond-Verfahren so aneinander befestigt, dass sich der Kühlkanal 6 und davon abgehende Teilkühlkanäle 8 einstellen.

Letztlich gibt es einen Zulauf 9 und einen Ablauf 10, um ein Kühlfluid, wie eine Flüssigkeit bzw. Öl zuzuführen und abzuführen. Die Richtung des Abführens ist bspw. in Fig. 1 mit dem Pfeil 11 symbolisiert. Der Pfeil 11 gibt somit die Strömungsrichtung des Kühlfluids an.

### Bezugszeichenliste

- 1: Akkupack
- 2: Stromspeicherzelle
- 3: elektrischer Anschluss
- 4: Stromleiter
- 5: Zellverbindung / Verbindung / Verbinder
- 6: Kühlkanal
- 7: (Kontakt-)Blech
- 8: Teilkühlkanal
- 9: Zulauf
- 10: Ablauf
- 11: Strömungsrichtung

## Patentansprüche

1. Akkupack (1) für eine Energieversorgung eines Elektromotors, mit mehreren zylindrischen Stromspeicherzellen (2), wobei die Stromspeicherzellen (2) nebeneinander angeordnet sind, wobei die Stromspeicherzellen (2) auf derselben Seite wenigstens einen elektrischen Anschluss (3) besitzen, wobei jeder dieser elektrischen Anschlüsse (3) mit einem gemeinsamen Stromleiter (4) im Bereich einer Zellverbindung (5) verbunden ist, **dadurch gekennzeichnet, dass** ein Stromleiter (4) als zweilagiges (Kontakt-)Blech (7) ausgebildet ist, das wenigstens einen Kühlkanal (6) zur Abfuhr von über die elektrischen Anschlüsse (3) übertragene Wärme der Stromspeicherzelle (2) ausbildet.

2. Akkupack (1) nach Anspruch 1, **dadurch gekennzeichnet, dass** sich der Kühlkanal (6) in eine Vielzahl von Teilkühlkanäle (8) im Inneren des Stromleiters (4) aufteilt.

3. Akkupack(1) nach einem der Ansprüche 1 oder 2, **dadurch gekennzeichnet, dass** wenigstens einige der Teilkühlkanäle (8) zwischen den Verbindungen (5) verlaufen.

4. Akkupack (1) nach einem der Ansprüche 1 bis 3, **dadurch gekennzeichnet, dass** der Stromleiter (4) einen Hauptkörper besitzt, der einen Zulauf (9) und einen Ablauf (10) besitzt, wobei der Hauptkörper darüber hinaus außenseitig verschlossen ist.

5. Akkupack (1) nach einem der Ansprüche 1 bis 4, **dadurch gekennzeichnet, dass** die zwei (Kontakt-)Bleche (7) miteinander in einem Roll-Bond-Verfahren unlösbar verbunden sind.

6. Akkupack (1) nach Anspruch 5, **dadurch gekennzeichnet, dass** der Kühlkanal (6) und/oder die Teilkühlkanäle (8) in dem Roll-Bond-Verfahren geschaffen sind und/oder die Verbindung(en) der elektrischen Anschlüsse (3) mit dem Hauptkörper in dem Roll-Bond-Verfahren geschaffen ist/sind.

7. Akkupack (1) nach einem der Ansprüche 1 bis 6, **dadurch gekennzeichnet, dass** die (Kontakt-)Bleche (7) auf der den Teilkühlkanälen (8) zugewandten Innenseite eine Trennmittelbeschichtung besitzen.

8. Akkupack (1) nach einem der Ansprüche 1 bis 7, **dadurch gekennzeichnet, dass** der Stromleiter (4) auf seiner dem elektrischen Anschluss (3) zugewandten Seite eine elektrisch isolierende Beschichtung besitzt und/oder in dem Kühlkanal (6) / in den Teilkühlkanälen (8) eine elektrisch nicht-leitfähige Flüssigkeit vorhanden ist oder einbringbar ist.

9. Akkupack (1) nach einem der Ansprüche 1 bis 8, **dadurch gekennzeichnet, dass** der elektrische Anschluss (3) mit einem (Kontakt-)Blech (7) oder beiden (Kontakt-)Blechen (7) unter Ausbildung der Zellverbindung (5) verschweißt ist.

10. Verfahren zum Herstellen eines Akkupacks (1) für eine Energieversorgung eines Elektromotors, mit mehreren zylindrischen Stromspeicherzellen (2), wobei die Stromspeicherzellen (2) nebeneinander angeordnet werden, wobei die Stromspeicherzellen (2) auf derselben Seite wenigstens einen elektrischen Anschluss (3) besitzen, wobei jeder dieser elektrischen Anschlüsse (3) mit einem gemeinsamen Stromleiter (4) im Bereich einer Zellverbindung (5) verbunden wird, wobei ein Stromleiter (4) als zweilagiges (Kontakt-)Blech (7) ausgebildet wird, das wenigstens einen Kühlkanal (6) zur Abfuhr von über die elektrischen Anschlüsse (3) übertragene Wärme der Stromspeicherzelle (2) ausbildet und/oder wobei die elektrischen Anschlüsse mehrerer Stromspeicherzellen (2) mit einem Stromleiter verschweißt werden und der Stromleiter (dabei oder vorher) aus zwei (Kontakt-)Blechen unter Ausbildung von Kühlkanälen in einem Roll-Bond-Verfahren hergestellt wird.
